# EUROPÄISCHE PATENTSCHRIFT

(11) **EP 3 727 953 B1**
(45) Veröffentlichungstag und Bekanntmachung des Hinweises auf die Patenterteilung: **27.10.2021**
(21) Anmeldenummer: 18829831.9
(22) Anmeldetag: 20.12.2018
(51) Int. Cl.: B60R 22/28

(54) **GURTSCHLOSSBAUGRUPPE MIT GURTKRAFTBEGRENZER SOWIE VERFAHREN ZUR MONTAGE DER GURTSCHLOSSBAUGRUPPE**
BELT BUCKLE ASSEMBLY HAVING A BELT FORCE LIMITER AND METHOD FOR INSTALLING THE BELT BUCKLE ASSEMBLY
MODULE DE BOUCLE DE CEINTURE MUNI D'UN LIMITEUR D'EFFORT DE CEINTURE AINSI QUE PROCÉDÉ DE MONTAGE D'UN MODULE DE BOUCLE DE CEINTURE

(30) Priorität: 20.12.2017 DE 102017223333
(43) Veröffentlichungstag der Anmeldung: 28.10.2020
(73) Patentinhaber: VOLKSWAGEN AKTIENGESELLSCHAFT, 38440 Wolfsburg (DE)
(72) Erfinder: EFFENBERGER, Witali, 38176 Wendeburg (DE)
(86) Internationale Anmeldenummer: PCT/EP2018/086044
(87) Internationale Veröffentlichungsnummer: WO 2019/122048

(56) Entgegenhaltungen:
- WO-A2-97/18971
- DE-A1-102014 204 990
- US-A- 3 829 122
- US-A1- 2004 041 390

## Beschreibung

Die Erfindung betrifft eine Gurtschlossbaugruppe für ein Kraftfahrzeug sowie ein Verfahren zur Montage der Gurtschlossbaugruppe, wobei diese wenigstens ein Gurtschloss, einen mit dem wenigstens einen Gurtschloss wirkverbundenen linearen Gurtkraftbegrenzer sowie einen Beschlag aufweist und zumindest der Gurtkraftbegrenzer über den Beschlag karosseriefest und der Gurtkraftbegrenzer zudem schwenkbeweglich an dem Beschlag angeordnet ist.

Zur Vermeidung von Verletzungen von Fahrzeuginsassen während eines Unfalles, welche durch das Einwirken des Sicherheitsgurtes auf den Brustbereich des Fahrzeuginsassen hervorgerufen werden, sind moderne Insassenrückhaltesysteme mit Gurtkraftbegrenzern ausgestattet, durch welche die einwirkenden Kräfte auf ein für den Fahrzeuginsassen biomechanisch ertragbares Maß reduziert werden.

Solche Gurtkraftbegrenzer können beispielsweise als im Gurtaufroller integrierte oder unterhalb des Gurtschlosses angeordnete Torsionsstäbe ausgeführt oder aber als lineare Gurtkraftbegrenzer im Bereich der Gurtschlösser montiert sein. Im letzteren Falle wird dabei insbesondere über eine Drahtseilanbindung zwischen Gurtschloss und Gurtkraftbegrenzer die auf das Gurtschloss wirkende Kraft in den Gurtkraftbegrenzer eingeleitet und zumindest ein Teil der mit der Kraft korrespondierenden Energie im Gurtkraftbegrenzer gezielt abgebaut.

Einige Ausgestaltungen eines Gurtkraftbegrenzers nach der im vorherigen Absatz beschriebenen Art zeigt unter anderem die DE 10 2016 015 161 A1. Die Offenbarung umfasst neben einer auf einem Torsionsstab basierenden Ausführungsform mehrere Varianten linearer Gurtkraftbegrenzer, welche zum Abbau der in den Gurtkraftbegrenzer eingebrachten Energie wesentlich auf der Verformung von Teilen des Gurtkraftbegrenzers beruhen. Die Gurtkraftbegrenzer eignen sich hierbei zur Verwendung für vordere Fahrzeugsitze sowie insbesondere für Sitze im Fondbereich des Fahrzeuges, wobei die Gurtschlösser im Fondbereich des Fahrzeuges erkennbar teils als Doppelgurtschloss ausgebildet sind.

Einen ebenfalls auf Verformung innerer Teile basierender Gurtkraftbegrenzer beschreibt zudem die GB 2 327 919 A, wobei bei diesem die auf den Fahrzeuginsassen wirkende Gurtkraft zwischen zwei unterschiedlichen Höhen begrenzbar ist.

Den offenbarten linearen Gurtkraftbegrenzern ist gemein, dass diese eine längliche, insbesondere zylindrische Form aufweisen und hierbei die Länge eine Notwendigkeit darstellt, um die eingeleitete Kraft respektive die damit korrespondierende Energie abzubauen.

Die längliche Form der linearen Gurtkraftbegrenzer kann jedoch bei deren Montage und insbesondere bei deren Montage im Zusammenwirken mit Doppelgurtschlössern eine die Montage erschwerende Ausgestaltung darstellen. Beispielsweise dann, wenn ein eigentlicher Montagepunkt des Gurtschlosses und/oder des Gurtkraftbegrenzers aufgrund dessen Form nicht zugänglich ist.

Aus der DE 10 2014 204 990 A1 ist zudem ein Gurtschloss nach dem Oberbegriff des Anspruchs 1 bekannt, welches über ein Seil mit einem linearen Gurtkraftbegrenzer wirkverbunden ist. Das Gurtschloss ist hierbei samt Gurtkraftbegrenzer über einen Bolzen karosseriefest und um die Achse des Bolzens schwenkbeweglich an dem Bolzen angeordnet.

Vor diesem Hintergrund liegt der Erfindung die Aufgabe zugrunde, eine Gurtschlossbaugruppe der eingangs genannten Art derart auszuführen, dass eine einfache Montage der Gurtschlossbaugruppe bei zugleich bauraumsparender Ausgestaltung der Gurtschlossbaugruppe gewährleistet wird. Des Weiteren liegt der Erfindung die Aufgabe zugrunde, ein Verfahren zur Montage einer solchen Gurtschlossbaugruppe zur Verfügung zu stellen.

Die erstgenannte Aufgabe wird gelöst mit einer Gurtschlossbaugruppe gemäß den Merkmalen des Patentanspruches 1 und des Patentanspruchs 8. Die Unteransprüche betreffen besonders zweckmäßige Weiterbildungen der Erfindung.

Erfindungsgemäß ist also eine Gurtschlossbaugruppe für ein Kraftfahrzeug vorgesehen, wobei die Gurtschlossbaugruppe wenigstens ein Gurtschloss, einen mit dem wenigstens einen Gurtschloss wirkverbundenen linearen Gurtkraftbegrenzer sowie einen Beschlag aufweist und zumindest der Gurtkraftbegrenzer über den Beschlag karosseriefest angeordnet ist. Neben dem Gurtkraftbegrenzer sollte über den Beschlag zudem das wenigstens eine Gurtschloss und hierbei insbesondere zwei Gurtschlösser in Form einer Doppelgurtschlossanordnung karosseriefest angeordnet sein. Darüber hinaus ist der Gurtkraftbegrenzer erfindungsgemäß schwenkbeweglich an und auch gegenüber dem Beschlag, welcher auch als Befestigungsrahmen angesehen werden kann, angeordnet und wenigstens zwischen einer Einbaustellung und einer Betriebsstellung verschwenkbar. Die schwenkbare Ausgestaltung des Gurtkraftbegrenzers führt vorteilhaft dazu, dass die Montage der Gurtschlossbaugruppe vereinfacht und zudem eine überaus optimale Ausnutzung von Bauraum gewährleistet werden kann.

Der lineare Gurtkraftbegrenzer ist im Wesentlichen länglich und in zylindrischer Form ausgestaltet und besteht wenigstens aus einem verformenden Verformelement und einem hohlzylindrisch ausgeprägten und durch das Verformelement zu verformenden Umformkörper. Das Verformelement sollte hierbei z. B. über zumindest ein Zugmittel, insbesondere ein Zugseil, mit dem Gurtschloss wirkverbunden sein, wobei das Zugmittel oder die Zugmittel über ein oder mehrere Lager und/oder Führungen gelagert und/oder geführt sein können. In einer vorteilhaft einfachen Ausgestaltung kann das Zugmittel oder die Zugmittel über eine Umlenkrolle oder auch mehrere Umlenkrollen geführt und/oder gelagert werden. Aufgrund der hohlzylindrischen Ausgestaltung des Umformelementes vollführt das Verformelement eine im Wesentlichen lineare Bewegung bei der Verformung des Umformelementes, was den Charakter des linearen Gurtkraftbegrenzers kennzeichnet. Des Weiteren sollte der lineare Gurtkraftbegrenzer Befestigungselemente zur Anordnung am Beschlag und/oder kann ein den Gurtkraftbegrenzer zumindest teilweise umschließendes Gehäuse aufweisen.

Die Wandlung der vom Fahrzeuginsassen z. B. während eines Unfalles über den Sicherheitsgurt und die am Sicherheitsgurt beweglich angeordnete Gurtzunge auf das mit der Gurtzunge verbundene Gurtschloss und vom Gurtschloss mittels Zugmitteln auf den Gurtkraftbegrenzer übertragenen Energie erfolgt im Wesentlichen durch Verformung des Gurtkraftbegrenzers, also Wandlung in mechanische Arbeit, sowie Wandlung in Wärmeenergie.

Die jeweilige Ausrichtung des Gurtkraftbegrenzers in dessen Einbaustellung und dessen Betriebsstellung sollte so ausgestaltet sein, dass eine Längsachse des Gurtkraftbegrenzers in der Einbaustellung im Wesentlichen senkrecht zu dieser Längsachse des Gurtkraftbegrenzers in der Betriebsstellung ist. Denkbar ist jedoch ebenso, dass der Winkel zwischen der Längsachse in Einbaustellung und der Längsachse in Betriebsstellung in einem Winkelbereich von 70 Grad bis 110 Grad liegt.

In einer überaus vorteilhaften Weiterbildung der Erfindung weist die Gurtschlossbaugruppe ein Haltemittel und/oder einen Haltemittelverbund auf, mittels welcher der Gurtkraftbegrenzer in der Einbaustellung lösbar fixiert oder fixierbar ist. Mittels des Haltemittels und/oder des Haltemittelverbundes besteht die Möglichkeit, den Gurtkraftbegrenzer in der Einbaustellung zu fixieren, insbesondere während die Montage der Gurtschlossbaugruppe erfolgt. Somit wäre es nicht vonnöten, den Gurtkraftbegrenzer während der Montage, z. B. durch den die Montage durchführenden Monteur, per Hand oder durch einen roboterautomatisierten Prozess in der Einbaustellung zu halten. In eine Verschwenkrichtung des Gurtkraftbegrenzers, also senkrecht zu einer Schwenkachse, sollte ein kraft- und/oder formschlüssiges Fixieren des Gurtkraftbegrenzers vorliegen.

Darüber hinaus stellt sich eine Ausführungsform der Erfindung als besonders gewinnbringend dar, wenn das Haltemittel und/oder der Haltemittelverbund teilweise oder vollständig entfernbar ist. Auf Basis einer solchen Ausgestaltung der Erfindung ist denkbar, dass das Haltemittel und/oder der Haltemittelverbund lediglich bis zum Abschluss der Montage der Gurtschlossbaugruppe an dieser verbleibt, wobei jedoch ein teilweises Verbleiben des Haltemittels und/oder des Haltemittelverbundes möglich sein kann. Das Entfernen bietet beispielsweise den Vorteil, dass das Haltemittel und/oder der Haltemittelverbund auf die Montage der Gurtschlossbaugruppe folgende Fertigungsschritte nicht störend beeinflusst und der vorhandene Bauraum optimal ausgenutzt werden kann.

Eine zudem mit Vorteil behaftete Ausgestaltung der erfindungsgemäßen Gurtschlossbaugruppe liegt darin begründet, dass der Haltemittelverbund durch in dem Gurtkraftbegrenzer, in einem Gehäuse des Gurtkraftbegrenzers und/oder in dem Beschlag ausgebildete Ausformungen realisiert ist, wobei die Ausformungen miteinander oder mit Teilen des Beschlages oder des Gehäuses den Gurtkraftbegrenzer fixierend zusammenwirken. Die Ausformungen können hierbei beispielsweise durch in den Gurtkraftbegrenzer, insbesondere in das Gehäuse des Gurtkraftbegrenzers und den Beschlag eingebrachte Erhebungen und/oder Vertiefungen ausgebildet sein. Dabei ist es denkbar, dass die jeweiligen Ausformungen z. B. mittels Prägens erzeugt werden. Neben nachgeschalteten Fertigungsprozessen wie einem Prägen der Ausformungen ist auch denkbar, dass diese bereits bei der Fertigung des Gurtkraftbegrenzers, insbesondere des Gehäuses des Gurtkraftbegrenzers und/oder des Beschlages, beispielsweise mittels Tiefziehprozessen in diese eingebracht werden.

Ist darüber hinaus das Haltemittel eine zerstörungsfrei oder zumindest teilweise zerstörungsbehaftet entfernbare Halterung, dann liegt hierin insbesondere eine vorteilhafte, konstruktiv einfache Ausgestaltung des Haltemittels, welche zudem kostengünstig realisierbar ist. Hierbei wäre es von Vorteil, wenn die Halterung aus einem Kunststoff besteht. Denkbar ist in diesem Zusammenhang eine abreißbare Kunststoffhalterung oder auch Kunststoffclip. Die Halterung, z. B. in Form der Kunststoffhalterung oder des -clip, kann entsprechend vollständig von der Gurtschlossbaugruppe entfernt werden oder aber ein Teil der Halterung verbleibt an bzw. in der Gurtschlossbaugruppe. Zum Entfernen der Halterung in besonders einfacher Weise kann die Halterung eine oder auch mehrere Sollbruchstellen aufweisen.

In einer weiteren praxisrelevanten Ausgestaltungsform der Erfindung ist zumindest ein Befestigungsmittel zur karosseriefesten Anbindung des Beschlages in der Einbaustellung des Gurtkraftbegrenzers für eine werkzeuglose oder werkzeugbehaftete Montage zugänglich, wobei in korrespondierender Weise das zumindest eine Befestigungsmittel in der Betriebsstellung des Gurtkraftbegrenzers für eine werkzeuglose oder werkzeugbehaftete Montage unzugänglich ist. Insbesondere bei einer werkzeugbehafteten Montage wird diese aufgrund der Zugänglichkeit des zumindest eines Befestigungsmittels deutlich vereinfacht und eine kompakte Gurtschlossbaugruppe ermöglicht. In besonders vorteilhafter Ausführung sind alle Befestigungsmittel zur karosseriefesten Anbindung der Gurtschlossbaugruppe in der Einbaustellung des Gurtkraftbegrenzers zugänglich. Entsprechend wären hierbei die Befestigungsmittel in der Betriebsstellung des Gurtkraftbegrenzers unzugänglich.

Überdies ist eine vielversprechende Ausgestaltung der Erfindung dadurch gekennzeichnet, dass die Gurtschlossbaugruppe zumindest ein Feststellmittel aufweist, mittels welchem der Gurtkraftbegrenzer in der Betriebsstellung gegen ein Verschwenken fixiert ist. Hierdurch wird bewirkt, dass die Funktion des Gurtkraftbegrenzers, also der Abbau der in den Gurtkraftbegrenzer eingeleiteten Energie, uneingeschränkt gewährleistet werden kann und keine Einschränkungen aufgrund einer weiterhin bestehenden Schwenkbarkeit des Gurtkraftbegrenzers nach der Montage der Gurtschlossbaugruppe zu erwarten sind. Das Fixiermittel muss dabei derart ausgestaltet sein, dass dieses zumindest die senkrecht zur Schwenkachse auf den Gurtkraftbegrenzer entgegen der Betriebsstellung wirkenden Kräfte aufnehmen kann und hierdurch ein Schwenken aus der Betriebsstellung verhindert wird.

Die zweitgenannte Aufgabe wird gelöst mittels eines Verfahrens zur Montage einer Gurtschlossbaugruppe gemäß den Merkmalen des Patentanspruches 8. Die sich hierauf beziehenden Unteransprüche betreffen besonders zweckmäßige Weiterbildungen der Erfindung.

Erfindungsgemäß ist somit weiterhin ein Verfahren zur Montage einer Gurtschlossbaugruppe vorgesehen, bei welchem die Gurtschlossbaugruppe in der Einbaustellung des Gurtkraftbegrenzers über den Beschlag karosseriefest an dem Kraftfahrzeug befestigt und der Gurtkraftbegrenzer nach der Befestigung der Gurtschlossbaugruppe in die Betriebsstellung verschwenkt wird. Die karosseriefeste Befestigung des Beschlages an sich erfolgt vorteilhafterweise mittels des zumindest einen, insbesondere lösbaren Befestigungsmittels. Während der Montage ist somit der Gurtkraftbegrenzer erfindungsgemäß in der Einbaustellung positioniert, wodurch, bedingt durch Zugänglichkeit des Befestigungsmittels oder der Befestigungsmittel der Gurtschlossbaugruppe, eine einfache Montage der Gurtschlossbaugruppe ermöglicht werden kann. Der Montage der Gurtschlossbaugruppe folgend wird der Gurtkraftbegrenzer in seine Betriebsstellung verschwenkt, wodurch der Gurtkraftbegrenzer seine eigentliche Funktion erfüllen kann.

Eine besonders vorteilhafte Weiterbildung des erfindungsgemäßen Verfahrens liegt vor, wenn das Haltemittel und/oder der Haltemittelverbund sich aufgrund des Verschwenkens des Gurtkraftbegrenzers aus der Einbaustellung selbsttätig löst oder zumindest teilweise entfernt wird oder das Haltemittel und/oder der Haltemittelverbund vor dem Verschwenken des Gurtkraftbegrenzers aus der Einbaustellung gelöst oder zumindest teilweise entfernt wird. Durch ein selbsttätiges Lösen des Haltemittels und/oder des Haltemittelverbundes wird die Montage vereinfacht und der Montagezeitaufwand verringert, da kein zusätzliches Lösen des Haltemittels und/oder des Haltemittelverbundes notwendig ist. Ein Entfernen des Haltemittels und/oder des Haltemittelverbundes an sich optimiert den vorhandenen Bauraum für z. B. nachfolgende Fertigungsprozesse.

Wird zudem der Gurtkraftbegrenzer nach dem Verschwenken in die Betriebsstellung in dieser fixiert, so ist dies dahingehend als gewinnbringend anzusehen, dass der Gurtkraftbegrenzer gegen ein Verschwenken aus der Betriebsstellung in dieser fixiert ist und entsprechend die Funktion des Gurtkraftbegrenzers gewährleistet werden kann.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: eine Ausführungsform der erfindungsgemäßen Gurtschlossbaugruppe;
- Fig. 2: eine Seitenansicht einer erfindungsgemäßen Gurtschlossbaugruppe;
- Fig. 3: einen Gurtkraftbegrenzer in Einbaustellung;
- Fig. 4: eine schematische Darstellung eines Haltemittelverbundes.

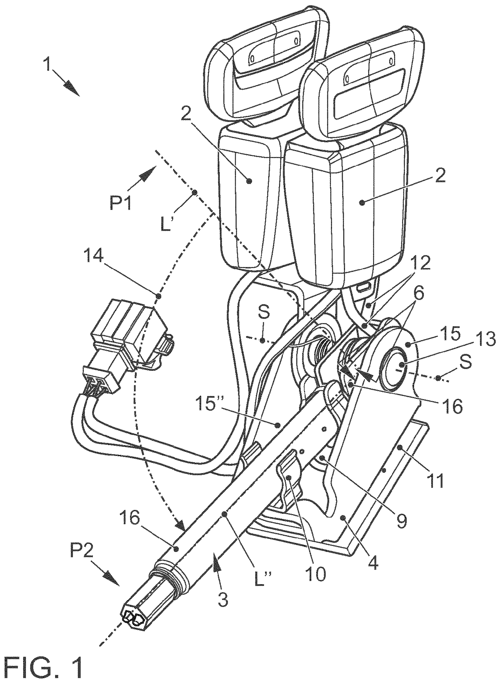

Figur 1 zeigt eine Ausführungsform der erfindungsgemäßen Gurtschlossbaugruppe 1. Die Gurtschlossbaugruppe 1 verfügt hierbei über zwei Gurtschlösser 2 sowie einen mit einem der Gurtschlösser 2, in Figur 1 dem rechten der Gurtschlösser 2, über die Zugmittel 12 wirkverbundenen linearen Gurtkraftbegrenzer 3. Darüber hinaus weist die Gurtschlossbaugruppe 1 den Beschlag 4 auf, über welchen der Gurtkraftbegrenzer 3 und die Gurtschlösser 2 karosseriefest an der Karosserie 11 angeordnet sind. Der Gurtkraftbegrenzer 3 ist zudem über den Bolzen 13 schwenkbeweglich an dem Beschlag 4 angeordnet. Der Gurtkraftbegrenzer 3 ist hierbei zwischen der Einbaustellung P1, in der Figur 1 dargestellt durch die Längsachse L' des Gurtkraftbegrenzers 3, und der Betriebsstellung P2 verschwenkbar, wobei der Gurtkraftbegrenzer in Figur 1 in ebendieser Betriebsstellung P2 dargestellt und diese zudem durch die Längsachse L" des Gurtkraftbegrenzers 3 aufgezeigt ist. Das Verschwenken des Gurtkraftbegrenzers 3, welches während des Montageprozesses der Gurtschlossbaugruppe 1 erfolgt, ist durch den Pfeil 14 angedeutet. Vor dem Verschwenken des Gurtkraftbegrenzers 3, hierbei senkrecht zur Schwenkachse S, die durch den Bolzen 13 verläuft, wird die Gurtschlossbaugruppe 1 über das in dieser Ausführungsform der Gurtschlossbaugruppe 1 als Schraube ausgebildete Befestigungsmittel 9 karosseriefest verbunden, wobei das Befestigungsmittel 9 in der Einbaustellung P1 für eine werkzeuglose und/oder werkzeugbehaftete Montage zugänglich ist. Wie in Figur 1 zu erkennen, ist dies hingegen in der aufgezeigten Betriebsstellung P2 des Gurtkraftbegrenzers 3 nicht der Fall, da das Befestigungsmittel 9 durch den Gurtkraftbegrenzer 3 sowie den Beschlag 4, insbesondere die sich orthogonal zur und von der Beschlaggrundplatte erstreckenden, im Wesentlichen V-förmig ausgebildeten und in Höhe der Breite des Beschlaggrundplatte zueinander beabstandeten Beschlagwände 15', 15" verdeckt wird. Dieses Vorgehen bei der Montage ermöglicht eine überaus kompakte Ausgestaltung und Anordnung der Gurtschlossbaugruppe, da keine sich von dem Beschlag 4 nach außen erstreckenden Verankerungsmöglichkeiten, z. B. in Form von Laschen, vorgesehen sein müssen. Die dem Gurtkraftbegrenzer 3 zugewandte Innenfläche der Beschlagwand 15' des Beschlages 4 stellt in dieser Ausführungsform zudem einen Teil des Haltemittelverbundes 6 dar. Der zweite Teil des Haltemittelverbundes 6 wird durch die der Innenfläche der Beschlagwand 15' zugewandten Außenfläche der Gehäusewand 16 des Gehäuses 7 des Gurtkraftbegrenzers 3 gebildet. Aufgrund einer zwischen der Innenfläche der Beschlagwand 15' und der Außenfläche der Gehäusewand 16 vorliegenden engen Toleranz, z. B. in Form einer Übergangs- oder Presspassung, besteht in Verschwenkrichtung, also senkrecht zur Schwenkachse S, ein Kraftschluss zwischen Gurtkraftbegrenzer 3 und Beschlag 4, wodurch der Gurtkraftbegrenzer 3 in der Einbaustellung P1 entsprechend durch den Haltemittelverbund 6 fixierbar ist. Zum Verschwenken des Gurtkraftbegrenzers 3 in die Betriebsstellung P2 wird der Kraftschluss zwischen Gurtkraftbegrenzer 3 und Beschlag 4 durch Aufbringen einer Kraft auf den Gurtkraftbegrenzer 3 in Verschwenkrichtung überwunden. Die Gurtschlossbaugruppe 1 verfügt in der Ausführungsform nach Figur 1 zudem über ein als Halteklammer ausgebildetes Feststellmittel 10, mittels welchem der Gurtkraftbegrenzer 3 in der Betriebsstellung P2 gegen ein Verschwenken fixiert ist. Das Fixieren in der Betriebsstellung erfolgt entsprechend nach dem Verschwenken des Gurtkraftbegrenzers 3 in seine Betriebsstellung P2.

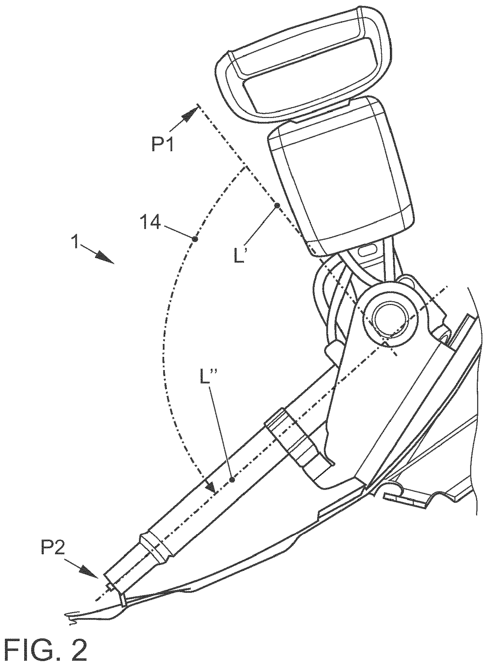

Figur 2 zeigt eine Seitenansicht der in Figur 1 dargestellten Ausführungsform der Gurtschlossbaugruppe 1. Nochmals verdeutlicht dargestellt sind hierbei die Stellungen P1, P2 des Gurtkraftbegrenzers 3, wobei die Einbaustellung P1 wiederum durch die Längsachse L' des Gurtkraftbegrenzers 3 und die Betriebsstellung P2 durch die Längsachse L" und den Gurtkraftbegrenzer 3 selbst verdeutlicht sind. In dieser Seitenansicht nach Figur 2 ist auch deutlich eine im Wesentlichen senkrechte Ausrichtung der Einbaustellung P1 und der Betriebsstellung P2 zu erkennen.

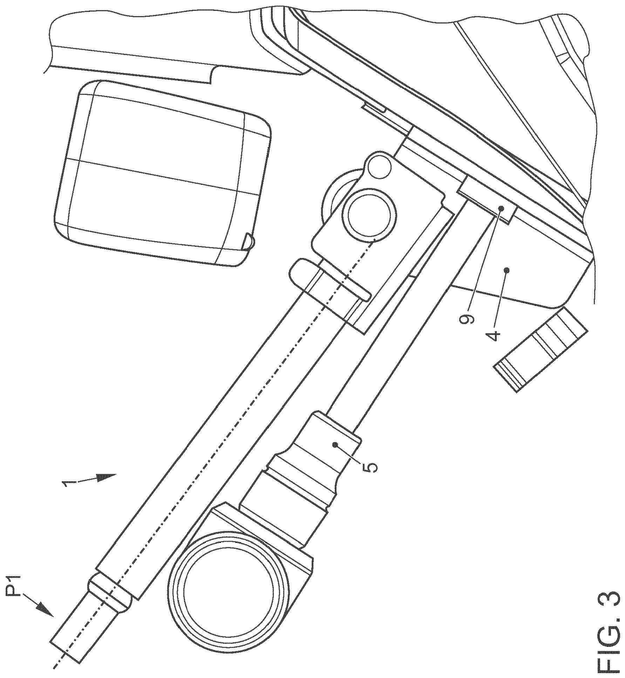

In Figur 3 ist der Gurtkraftbegrenzer 3 in seiner Einbaustellung P1 dargestellt. In dieser ist die werkzeugbehaftete Montage der Gurtschlossbaugruppe 1 unter Verwendung des Werkzeuges 5 möglich, wobei die Anbindung der Gurtschlossbaugruppe 1 über den Beschlag 4 mittels des als Schraube ausgebildeten Befestigungsmittels 9 erfolgt.

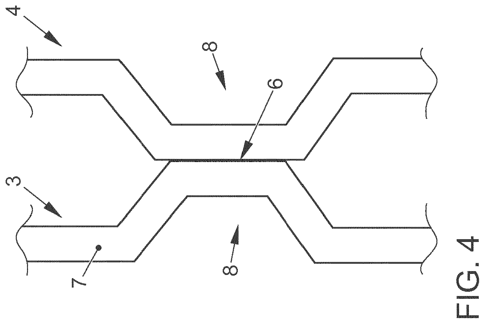

Figur 4 verdeutlicht schematisch die Ausbildung des Haltemittelverbundes 6 durch in die in dem Gehäuse 7 des Gurtkraftbegrenzers 3 und dem Beschlag 4 ausgebildeten Ausformungen 8, wobei die Ausformungen 8 miteinander, den Gurtkraftbegrenzer 3 fixierend, zusammenwirken.

### Bezugszeichenliste

- 1: Gurtschlossbaugruppe
- 2: Gurtschloss
- 3: Gurtkraftbegrenzer
- 4: Beschlag
- 5: Werkzeug

- 6: Haltemittelverbund
- 7: Gehäuse
- 8: Ausformungen
- 9: Befestigungsmittel
- 10: Feststellmittel

- 11: Karosserie
- 12: Zugmittel
- 13: Bolzen
- 14: Pfeil
- 15', 15": Beschlagwand

- 16: Gehäusewand

- L', L": Längsachse
- P1: Einbaustellung
- P2: Betriebsstellung
- S: Schwenkachse

## Patentansprüche

1. Gurtschlossbaugruppe (1) für ein Kraftfahrzeug mit wenigstens einem Gurtschloss (2), einem mit dem wenigstens einen Gurtschloss (2) wirkverbundenen linearen Gurtkraftbegrenzer (3) sowie einem Beschlag (4), über welchen zumindest der Gurtkraftbegrenzer (3) karosseriefest und der Gurtkraftbegrenzer (3) zudem schwenkbeweglich an dem Beschlag (4) angeordnet ist, **dadurch gekennzeichnet, dass** der Gurtkraftbegrenzer (3) schwenkbeweglich gegenüber dem Beschlag (4) angeordnet und wenigstens zwischen einer Einbaustellung (P1), in welcher der Gurtkraftbegrenzer (3) während einer Montage positioniert ist, und einer Betriebsstellung (P2) verschwenkbar ist.

2. Gurtschlossbaugruppe (1) nach Anspruch 1, **dadurch gekennzeichnet, dass** die Gurtschlossbaugruppe (1) ein Haltemittel und/oder einen Haltemittelverbund (6) aufweist, mittels welchem der Gurtkraftbegrenzer (3) in der Einbaustellung (P1) lösbar fixiert oder fixierbar ist.

3. Gurtschlossbaugruppe (1) nach den Ansprüchen 1 oder 2, **dadurch gekennzeichnet, dass** das Haltemittel und/oder der Haltemittelverbund (6) teilweise oder vollständig entfernbar ist.

4. Gurtschlossbaugruppe (1) nach zumindest einem der vorangehenden Ansprüche, **dadurch gekennzeichnet, dass** der Haltemittelverbund (6) durch in dem Gurtkraftbegrenzer (3), in einem Gehäuse (7) des Gurtkraftbegrenzers (3) und/oder in dem Beschlag (4) ausgebildete Ausformungen (8) realisiert ist, wobei die Ausformungen (8) miteinander oder mit Teilen des Beschlages (4) oder des Gehäuses (7) den Gurtkraftbegrenzer (3) fixierend zusammenwirken.

5. Gurtschlossbaugruppe (1) nach zumindest einem der vorangehenden Ansprüche, **dadurch gekennzeichnet, dass** das Haltemittel eine zerstörungsfrei oder zumindest teilweise zerstörungsbehaftet entfernbare Halterung ist.

6. Gurtschlossbaugruppe (1) nach zumindest einem der vorangehenden Ansprüche, **dadurch gekennzeichnet, dass** zumindest ein Befestigungsmittel (9) zur karosseriefesten Anbindung des Beschlages (4) in der Einbaustellung (P1) des Gurtkraftbegrenzers (3) für eine werkzeuglose und/oder werkzeugbehaftete Montage zugänglich ist.

7. Gurtschlossbaugruppe (1) nach zumindest einem der vorangehenden Ansprüche, **dadurch gekennzeichnet, dass** die Gurtschlossbaugruppe (1) zumindest ein Feststellmittel (10) aufweist, mittels welchem der Gurtkraftbegrenzer (3) in der Betriebsstellung (P2) gegen ein Verschwenken fixiert ist.

8. Verfahren zur Montage einer Gurtschlossbaugruppe (1) nach zumindest einem der vorangehenden Ansprüche, **dadurch gekennzeichnet, dass** die Gurtschlossbaugruppe (1) in der Einbaustellung (P1) des Gurtkraftbegrenzers (3) über den Beschlag (4) karosseriefest an dem Kraftfahrzeug befestigt und der Gurtkraftbegrenzer (3) nach der Befestigung der Gurtschlossbaugruppe (1) in die Betriebsstellung (P2) verschwenkt wird.

9. Verfahren nach zumindest einem der vorangehenden Ansprüche, **dadurch gekennzeichnet, dass** das Haltemittel und/oder der Haltemittelverbund (6) sich aufgrund des Verschwenkens des Gurtkraftbegrenzers (3) aus der Einbaustellung (P1) selbsttätig löst oder zumindest teilweise entfernt wird oder das Haltemittel und/oder der Haltemittelverbund (6) vor dem Verschwenken des Gurtkraftbegrenzers (3) aus der Einbaustellung (P1) gelöst oder zumindest teilweise entfernt wird.

10. Verfahren nach zumindest einem der vorangehenden Ansprüche, **dadurch gekennzeichnet, dass** der Gurtkraftbegrenzer (3) nach dem Verschwenken in die Betriebsstellung (P2) in der Betriebsstellung (P2) fixiert wird.

## Claims

1. Belt buckle assembly (1) for a motor vehicle having at least one belt buckle (2), a linear belt force limiter (3) operatively connected to the at least one belt buckle (2), and a fitting (4) via which at least the belt force limiter (3) is arranged in a manner mounted on the body, and the belt force limiter (3) is also arranged pivotably on the fitting (4), **characterized in that** the belt force limiter (3) is arranged pivotably in relation to the fitting (4) and is pivotable at least between a fitting position (P1), in which the belt force limiter (3) is positioned during installation, and an operational position (P2).

2. Belt buckle assembly (1) according to Claim 1, **characterized in that** the belt buckle assembly (1) has a holding means and/or a holding means assembly (6) by means of which the belt force limiter (3) is fixed or fixable releasably in the fitting position (P1).

3. Belt buckle assembly (1) according to Claim 1 or 2, **characterized in that** the holding means and/or the holding means assembly (6) are/is partially or completely removable.

4. Belt buckle assembly (1) according to at least one of the preceding claims, **characterized in that** the holding means assembly (6) is realised by formations (8) formed in the belt force limiter (3), in a housing (7) of the belt force limiter (3) and/or in the fitting (4), wherein the formations (8) interact with one another or with parts of the fitting (4) or of the housing (7) in a manner fixing the belt force limiter (3).

5. Belt buckle assembly (1) according to at least one of the preceding claims, **characterized in that** the holding means is a holder which is removable without destruction or with at least partial destruction.

6. Belt buckle assembly (1) according to at least one of the preceding claims, **characterized in that** at least one fastening means (9) for the body-mounted connection of the fitting (4) in the fitting position (P1) of the belt force limiter (3) is accessible for a tool-free and/or tool-associated installation.

7. Belt buckle assembly (1) according to at least one of the preceding claims, **characterized in that** the belt buckle assembly (1) has at least one locking means (10) by means of which the belt force limiter (3) is fixed against pivoting in the operational position (P2).

8. Method for installing a belt buckle assembly (1) according to at least one of the preceding claims, **characterized in that**, in the fitting position (P1) of the belt force limiter (3), the belt buckle assembly (1) is fastened via the fitting (4) in a manner mounted on the body of the motor vehicle, and, after the fastening of the belt buckle assembly (1), the belt force limiter (3) is pivoted into the operational position (P2).

9. Method according to at least one of the preceding claims, **characterized in that** the holding means and/or the holding means assembly (6) are/is automatically released or at least partially removed by the belt force limiter (3) pivoting out of the fitting position (P1), or the holding means and/or the holding means assembly (6) are/is released or at least partially removed before the belt force limiter (3) pivots out of the fitting position (P1).

10. Method according to at least one of the preceding claims, **characterized in that** the belt force limiter (3) after pivoting into the operational position (P2) is fixed in the operational position (P2).

## Revendications

1. Module de boucle de ceinture (1) pour un véhicule automobile, comprenant au moins une boucle de ceinture (2), un limiteur d'effort de ceinture linéaire (3) en liaison fonctionnelle avec l'au moins une boucle de ceinture (2), ainsi qu'une ferrure (4), par l'intermédiaire de laquelle au moins le limiteur d'effort de ceinture (3) est agencé de manière fixe par rapport à la carrosserie et le limiteur d'effort de ceinture (3) est en outre agencé sur la ferrure (4) de manière mobile en pivotement, **caractérisé en ce que** le limiteur d'effort de ceinture (3) est agencé de manière mobile en pivotement par rapport à la ferrure (4) et peut être pivoté au moins entre une position d'installation (P1), dans laquelle le limiteur d'effort de ceinture (3) est positionné pendant un montage, et une position de fonctionnement (P2).

2. Module de boucle de ceinture (1) selon la revendication 1, **caractérisé en ce que** le module de boucle de ceinture (1) comprend un moyen de maintien et/ou un ensemble de moyens de maintien (6), au moyen duquel le limiteur d'effort de ceinture (3) est fixé ou peut être fixé de manière détachable dans la position d'installation (P1) .

3. Module de boucle de ceinture (1) selon les revendications 1 ou 2, **caractérisé en ce que** le moyen de maintien et/ou l'ensemble de moyens de maintien (6) est amovible en partie ou en totalité.

4. Module de boucle de ceinture (1) selon au moins l'une quelconque des revendications précédentes, **caractérisé en ce que** l'ensemble de moyens de maintien (6) est réalisé par des formations (8) façonnées dans le limiteur d'effort de ceinture (3), dans un boîtier (7) du limiteur d'effort de ceinture (3) et/ou dans la ferrure (4), les formations (8) coopérant de manière fixatrice les unes avec les autres ou avec des parties de la ferrure (4) ou du boîtier (7) du limiteur d'effort de ceinture (3).

5. Module de boucle de ceinture (1) selon au moins l'une quelconque des revendications précédentes, **caractérisé en ce que** le moyen de maintien est un support amovible de manière non destructrice ou au moins partiellement de manière destructrice.

6. Module de boucle de ceinture (1) selon au moins l'une quelconque des revendications précédentes, **caractérisé en ce qu'**au moins un moyen de fixation (9) pour le rattachement fixe par rapport à la carrosserie de la ferrure (4) dans la position d'installation (P1) du limiteur d'effort de ceinture (3) est accessible pour un montage sans outil et/ou avec outil.

7. Module de boucle de ceinture (1) selon au moins l'une quelconque des revendications précédentes, **caractérisé en ce que** le module de boucle de ceinture (1) comprend au moins un moyen d'immobilisation (10), au moyen duquel le limiteur d'effort de ceinture (3) est fixé contre un pivotement dans la position de fonctionnement (P2).

8. Procédé de montage d'un module de boucle de ceinture (1) selon au moins l'une quelconque des revendications précédentes, **caractérisé en ce que**, dans la position d'installation (P1) du limiteur d'effort de ceinture (3), le module de boucle de ceinture (1) est fixé au véhicule automobile de manière fixe par rapport à la carrosserie par l'intermédiaire de la ferrure (4) et le limiteur d'effort de ceinture (3) est pivoté dans la position de fonctionnement (P2) après la fixation du module de boucle de ceinture (1).

9. Procédé selon au moins l'une quelconque des revendications précédentes, **caractérisé en ce que** le moyen de maintien et/ou l'ensemble de moyens de maintien (6) est automatiquement détaché ou au moins partiellement retiré en raison du pivotement du limiteur d'effort de ceinture (3) hors de la position d'installation (P1), ou le moyen de maintien et/ou l'ensemble de moyens de maintien (6) est détaché ou au moins partiellement retiré avant le pivotement du limiteur d'effort de ceinture (3) hors de la position d'installation (P1).

10. Procédé selon au moins l'une quelconque des revendications précédentes, **caractérisé en ce que** le limiteur d'effort de ceinture (3) est fixé dans la position de fonctionnement (P2) après le pivotement dans la position de fonctionnement (P2).
